# EUROPEAN PATENT APPLICATION

(11) **EP 4 711 065 A1**
(43) Date of publication of application: **18.03.2026**
(21) Application number: 24461621.5
(22) Date of filing: 16.09.2024
(51) Int. Cl.: B23K 9/04, B23K 9/167, B23K 9/173, B23K 9/18, B23K 26/342, B23K 9/02, B23K 103/04

(54) **WELD REPAIR OF STEEL ALLOY COMPONENTS**

(71) Applicant: GE Vernova Technology GmbH, 5400 Baden (CH)
(72) Inventor: SASSATELLI, John M., Greenville, SC 29615 (US); DYNAK, Krzysztof, 02-256 Warszawa (PL); PARK, Junyoung, Greenville, SC 29615 (US)
(74) Representative: Patpol Kancelaria Patentowa Sp. z o.o.

(57) **Abstract**

A method (300) for repairing a steel alloy article is provided. The method includes depositing (302), using a first welding process, a first weld repair layer across a surface of the steel alloy article to be repaired. The first weld repair layer forms a heat-affected zone (HAZ) in the steel alloy article beneath the surface. The method also includes tempering (304) the heat-affected zone by depositing (358), using a second welding process, a second weld repair layer across the first weld repair layer. The first welding technique is different than the second welding process and induces a lower heat input into the steel alloy article than the second welding process, wherein a thickness of the first weld repair layer is thinner than a thickness of the second weld repair layer.

## Description

### BACKGROUND

The field of the disclosure relates generally to welding processes, and more particularly, to weld repair systems and methods of steel alloy components.

Chromium-molybdenum (CrMo) and chromium molybdenum vanadium (CrMoV) steel alloys are commonly used within a wide variety of components within turbines, turbomachines, and other industrial equipment. Although components fabricated from CrMo and CrMoV steel alloys generally exhibit a long service life, over time, wear, erosion, corrosion, shock, fatigue, and/or overstress may occur, which may, depending on the severity of the damage to the component, necessitate repair and/or replacement of the components. Repair of such components typically involves at least some welding, wherein a damaged portion of the component is removed and a structural member is welded into place or a weldment is built up in the location of the damaged portion of the component.

Depending on the size of the repair area, and/or the thickness of the material adjacent to the repair location, heat input from the welding process may produce a hardened heat-affected zone (HAZ). The HAZ is an area adjacent to the repair area of the component which may undergo changes in its properties as a result of being exposed to the relatively high temperatures during the welding process. Depending on the severity of the exposure to the high temperatures, the quality and/or the functionality of the repaired components may be compromised within the HAZ area.

To facilitate reducing the effects of the HAZ, at least some known welding processes use post-repair tempering. For example, in some known welding processes, the entire article is subject to heat treatment following completion of the weld repair. However, this tempering approach may be limited as a furnace may not be readily available in the field, and/or the size of the furnace may not be suitable to accommodate the article. Accordingly, depending on the article being repaired, it may require an extensive dis-assembling of the article and/or the associated machine that the article is used with. Such dis-assembling may be labor-intensive and costly, and/or extend the non-operational time of the article and/or machine. Moreover, the heat treatment may introduce distortions in the article, causing difficulties in re-assembling the article and/or in recoupling the article with the machine.

In another known tempering method, torch tempering is used to perform local heat post-weld treatment without removing the article from the machine for heat treatment. Torch tempering uses a torch to heat treat the article, which presents as an open flame hazard. Moreover, heat input in torch tempering is also difficult to control, and may result in difficulties in controlling the quality of tempering and/or the repair. Further, the article may distort from the heat treatment during torch tempering, potentially compromising the functionalities of the article and the machine.

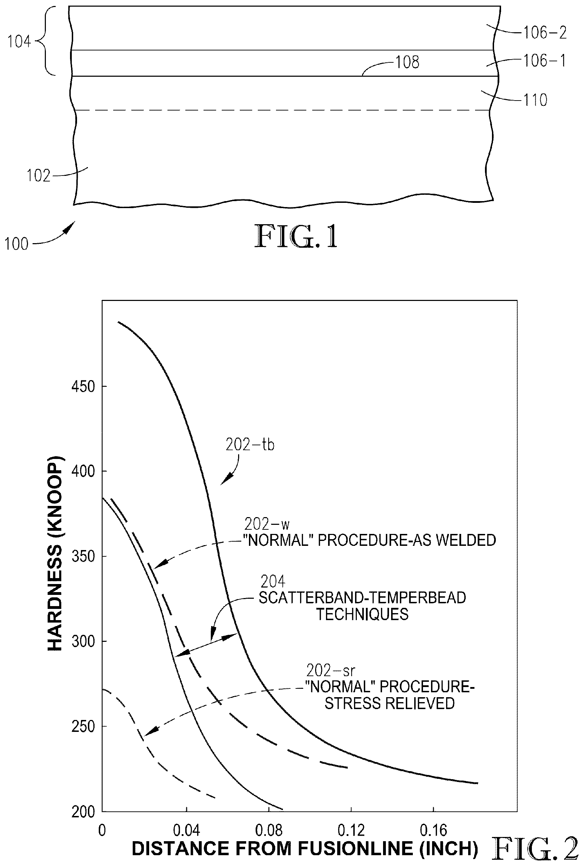

In another known tempering method, temperbead tempering is used to temper the HAZ area. In a typical temperbead tempering, a first layer of weld repair is applied, and the second layer having increased heat input is applied over the first layer to temper the HAZ in the base material. However, the deposition of the second layer requires precise control to reduce scatterband in temperbead tempering(See curves 202 tb in FIG. 2 described later, for example). Further, the relatively high heat input from the second layer for tempering may distort the article, potentially compromising the functionalities of the article and the machine. Furthermore, the process may be labor-intensive and/or costly, as often a height of the first layer of temperbead may be manually-ground down before the second layer can be deposited.

Accordingly, a need exits for an improved welding process that facilitates reducing the risk of material compromise in the HAZ area in a cost-effective and reliable manner.

### BRIEF DESCRIPTION

In one aspect, a method for repairing a steel alloy article is provided. The method includes depositing, using a first welding process, a first weld repair layer across a surface of the steel alloy article to be repaired. The first weld repair layer forms a heat-affected zone (HAZ) in the steel alloy article beneath the surface. The method also includes tempering the heat-affected zone by depositing, using a second welding process, a second weld repair layer across the first weld repair layer. The first welding technique is different than the second welding process and induces a lower heat input into the steel alloy article than the second welding process, wherein a thickness of the first weld repair layer is thinner than a thickness of the second weld repair layer.

In another aspect, a method for repairing a steel alloy article is provided. The method includes depositing, using a gas tungsten arc welding (GTAW) technique, a first weld repair layer across a surface of a steel alloy article. The first weld repair layer forms a heat-affected zone in the steel alloy article beneath the surface. The method also includes tempering the heat-affected zone by depositing, using a gas metal arc welding (GMAW) technique, a second weld repair layer across the first weld repair layer. The GTAW technique has a lower heat input than the GMAW technique, and a thickness of the first weld repair layer is thinner than a thickness of the second weld repair layer.

### BRIEF DESCRIPTION OF DRAWINGS

These and other features, aspects, and advantages of the present disclosure will become better understood when the following detailed description is read with reference to the accompanying drawings in which like characters represent like parts throughout the drawings.
FIG. 1 is a schematic diagram partial cross-section of an exemplary repaired steel alloy article.
FIG. 2 is a graph showing hardness of exemplary repaired steel alloy articles.
FIG. 3A is a flow chart of an exemplary method of repairing a steel alloy article.
FIG. 3B is a schematic diagram of an exemplary embodiment of the method shown in FIG. 3A.
FIG. 3C is a schematic diagram of an exemplary pattern that may be used in weave bead welding.

### DETAILED DESCRIPTION

The disclosure describes exemplary weld repair systems and methods of steel alloy articles. Steel alloy articles fabricated with materials, such as Chromium-molybdenum (CrMo) and/or chromium-molybdenum vanadium (CrMoV), are commonly used in components of turbines such as steam or gas turbines, turbomachines, or other industrial equipment, for example. Repairing damaged areas of such components using welding, may produces a heat-affected zone (HAZ) in the base material of the steel alloy articles. The welding process described herein uses tempering to facilitate improving the physical properties in the HAZ area and to facilitate reducing the likelihood of the materials within the HAZ area being compromised as a result of exposure to the heat used in the welding repair process.

FIG. 1 is a schematic diagram of a partial cross-section of an exemplary steel alloy article 100 that has been repaired via a welding process. In one embodiment, the article 100 is a component used within a turbine. Moreover, in the exemplary embodiment, the article 100 includes a base material 102 on which a weldment 104 has fabricated i.e., a plurality of layers of material have been deposited as described herein, during a weld process. The weldment 104 has been fabricated to a size and thickness that facilitates restoring the article 100 to its original dimensions after a damaged portion has been removed from the article 100 being repaired. The weldment 104 includes one or more weld repair layers 106 that have been deposited across the surface 108 of the base material 102, such that at least a first weld repair layer 106-1 is deposited directly across the surface 108 of the base material 102, and at least a second weld repair layer 106-2 is deposited across at least a portion of the first weld repair layer 106-1. The deposition of the first weld repair layer 106-1 may produce a HAZ 110 in the base material 102 beneath the surface 108 and in areas in close proximity to the repair area.

FIG. 2 is a graph illustrating exemplary hardness variations in a HAZ 110 (shown in FIG. 1) under various conditions, wherein hardness is plotted as a function of the distance from a fusion line 108. A fusion line refers to an interface created between a weld repair area and the base material of the article 100 (shown in FIG. 1). After the welding has been initiated, and following its completion, the hardness of the base material 102 increases in the HAZ 110 (See curve 202-w). The increased hardness may adversely change physical properties of the base material 102. such as, but not limited to, increasing a brittleness of the base material 102, and/or increasing a likelihood of cracking in the base material 102 in the future within that area. Moreover, the increased hardness may reduce the overall effectiveness of the weld repair.

As described above, post-repair tempering may facilitate reducing the hardness within the HAZ 110, and thus may facilitate relieving the stress induced by the weld repair process. Moreover, post-repair tempering may also facilitate reducing the overall dimensions of the HAZ (See curve 202-sr). However, as described above, known tempering processes may be limited and may be labor-intensive, costly, and/or time-consuming.

Systems and methods described herein address the problems in known welding repair methods. The invention described herein provides an unexpected result in that the overall welding repair speed and overall quality of the repaired article are both facilitated to be increased. Systems and methods described herein are thus advantageous in providing a welding repair process with increased speed because post-weld heat treatment is not necessary, thereby saving time and costs from dis-assembling and re-assembling the machine, for example. Further, distortion from the post-weld heat treatment is facilitated to be reduced and/or eliminated such that difficulties in re-assembling and maintaining the functionalities of the article and the machine are facilitated to be reduced. Moreover localized tempering, such as torch tempering, is not necessary such that the risks associated with open flame and distortion in the article from the relatively high heat input in localized tempering are also eliminated.

Systems and methods described herein may use different welding techniques in depositing a first and at least a second layer of weld repair. The first weld repair layer, which is deposited via a first welding technique, is formed with a relatively thin thickness and thus involves a relatively low heat input. As a result, the first weld repair layer produces a HAZ 110 having relatively small dimensions in the base material as compared to that produced using known welding processes. As such, an amount of heat needed to be transferred from the second layer to the base material to temper the HAZ 110 is facilitated to be reduced as compared to known welding processes. In the exemplary embodiment, the second layer, and any subsequent layers, are applied with a second welding technique that produces a higher heat input and that is more efficient than the first welding technique. As such, the second layer and second welding technique facilitates tempering the HAZ 110 while increasing the overall speed of repair.

Systems and methods described herein provide the advantages of a relatively thin first weld repair layer without a need for inter-pass machining, for example, as is required in at least some known temperbead methods. As such, the overall repair costs, labor costs, and the time duration of the repair are each facilitated to be reduced. As a result, the scatterband 204 is facilitated to be reduced and be positioned in close proximity to the fusion line (as shown for example in curve 202-sr of a stress-relieved article). Because the heat input from depositing the first layer of weld repair is relatively small, distortion from the heat input is also relatively small, as compared to known welding repair methods, thereby facilitating reducing any adverse effects of the welding repair process to the functionalities of the associated article and/or machine. Systems and methods described herein are also advantageous in using commercially available filler materials for weld repair, thereby facilitating reducing costs from procuring fillers, as compared to the costs associated with known torch tempering methods.

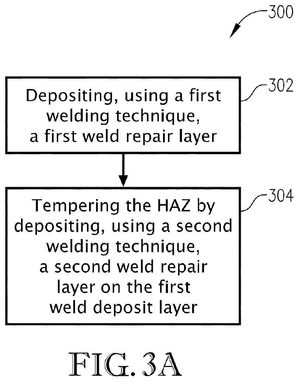

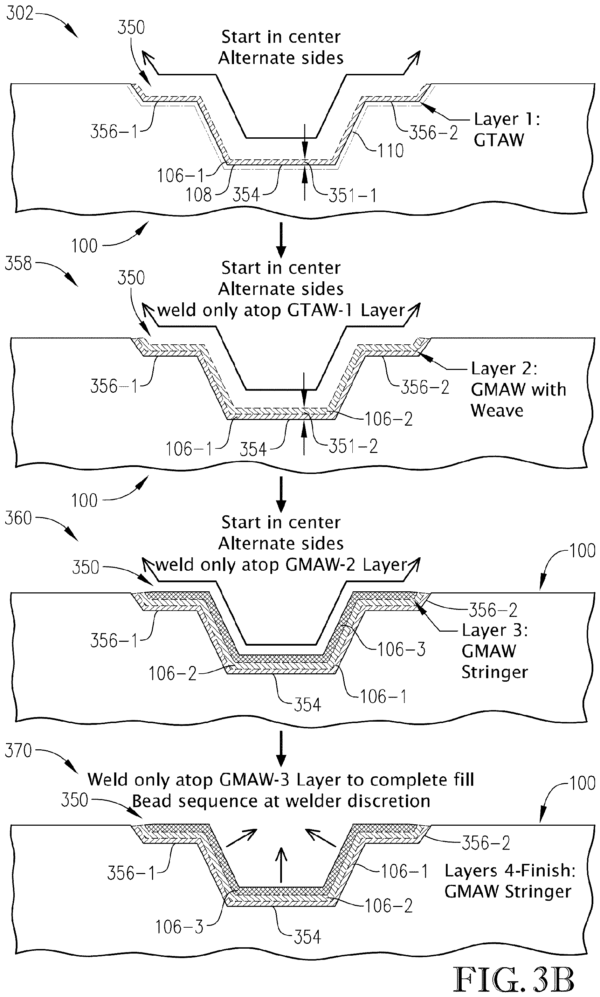

FIGs. 3A and 3B illustrate an exemplary method 300 of repairing a steel alloy article. More specifically, FIG. 3A is a flow chart of an exemplary welding repair method 300. In the example embodiments, the method 300 includes depositing 302, using a first welding technique, a first weld repair across a surface of a steel alloy article. Depositing the first weld repair forms an HAZ in the steel alloy article, beneath the surface. The method 300 also includes tempering 304 the HAZ by depositing, using a second welding technique, a second weld repair layer on the first weld deposit layer. The first welding technique uses and induces a lower heat input into the article as compared to the second welding technique. A thickness of the first weld repair layer is thinner than a thickness of the second weld repair layer.

FIG. 3B is an exemplary embodiment of the method 300. In the example embodiment, the method 300 includes depositing 302 a first weld repair layer. In some embodiments, before the first weld repair layer is deposited 302, the article 100 is prepped for welding. For example, the surface 108 of the article 100 in close proximity to a defect may be ground and/or excavated into an excavation 350 and the surface 108 bordering the excavation 350 is cleaned to prepare the surface 108 for deposition of the filler material. In depositing 302 a first weld repair layer, a fist welding technique is used. For example, in one embodiment, the first welding technique is a gas tungsten arc welding (GTAW) process. In other embodiments, other welding techniques, such as, but not limited to, a plasma arc welding (PAW) process, may be used to enable the systems and methods to operate as described herein. In the GTAW technique, the heat input is relative low and the thickness 351-1 of the deposited first weld repair layer 106-1 is relatively thin.

A relatively low heat input is advantageous in reducing the overall size of the HAZ 110 caused by heat during the deposition of the first weld repair layer 106-1. A relatively thin first weld repair layer 106-1 is also advantageous in facilitating transfer of heat therethrough to the HAZ 110 during depositing of the second weld repair layer for tempering the HAZ 110. In depositing the first weld repair layer 106-1, deposition may start from a center region 354 of the excavation 350 and progress towards an outer perimeter 356 of the excavation 350. Starting from the center region 354 provides relatively easy access for a welding torch to a relatively narrow excavation 350. In some embodiments, depositing the first weld repair layer starts from the outer perimeter 356 of the excavation 350 to the center region 354 of the excavation 350. Depositing starting from the center region 354 and proceeding towards the outer perimeter 356 or starting from the outer perimeter 356 toward the center region 354 facilitates the heat distribution while reducing hot spots. Welding towards the outer perimeter 356 may be alternated between different passes of deposition. For example, if the weld repair is deposited from the center region 354, in the first pass, the welding may proceed towards the first side 356-1, and in a second pass, the welding may proceed from the center region 354 towards the second side 356-2, i.e., a side of the repair opposite to the first side 356-1 in the second pass. The process should be repeated, alternating between the opposite sides of the repair area to facilitate substantially evenly inducing the heat input into the excavation 350.

In the example embodiment, deposition of the first weld repair layer is facilitated to be controlled by controlling the thickness of the first weld repair layer and amount of heat input from welding. The heat input may be controlled by controlling the voltage and/or amperage of the current used in welding, and/or travel speed of the weld head during welding. Example thickness of the first weld repair layer 106 may be in the range of about 0.5 mm to about 1.5 mm.

In the example embodiment, the method 300 also includes depositing 358 a second weld repair layer, using a second welding technique that is different from the first welding technique. An exemplary second welding technique is a gas metal arc welding (GMAW) process. Other welding techniques, such as a shielded metal arc welding (SMAW) or flux-cored arc welding (FCAW), may be used without deviation from the systems and methods described herein. Other example combinations of the first and second welding techniques may be laser welding as the first welding technique and SMAW as the second welding technique, or SMAW as the first welding technique and submerged arc welding (SAW) as the second welding technique. First and second welding techniques are not limited to the examples. First and second welding techniques are selected such that the heat input from the second welding technique is greater than that from the first welding technique. The heat induced from depositing the second weld repair layer 106-2 penetrates through the first weld repair layer 106-1 and facilitates tempering the HAZ in the base material 102. The thickness 351-2 of the second weld repair layer 106-2 is thicker than the first weld repair layer 106-1. The enhanced thickness of the second weld repair layer 106 2 is possible because of higher efficiency possible using the second welding technique as compared to the efficiency possible with the first welding technique in terms of speed of depositing weld repair. In depositing 358 the second weld repair layer, the heat input and the thickness of the second weld repair layer are controlled. For example, in the exemplary embodiment, the heat input from depositing 358 the second weld repair layer is controlled by controlling the voltage and/or amperage of the current, and/or traverse speed of the welding head. An exemplary range of the thickness of the second weld repair layer is between about 1 mm to about 3.5 mm. The heat input in depositing 358 the second weld repair layer is controlled to facilitate tempering the HAZ 110 in the base material, but without producing any additional HAZ in the base material.

The thinner thickness of the first weld repair layer than that of the second weld repair layer is advantageous in tempering the HAZ in the base material by the second weld repair layer. Without the initial deposition of the thinner first weld repair layer, the heat input from a third weld repair layer would be insufficient to adequately penetrate through the relatively thick second weld repair layer to temper the HAZ beneath. For example, if the thinner first weld repair layer was formed with a thickness of about 1 mm and the material within the HAZ has a thickness of about 3 mm, heat input from the second weld repair layer would be sufficient to penetrate through the first weld repair layer and temper the HAZ. However, if the thinner first weld repair layer is not initially deposited, the second weld repair layer is formed with a thickness of 3 mm, and a thickness of material within the HAZ would thus be increased to a thickness of about 5 mm due to increased heat input in depositing the second weld repair layer. As such, heat input from a third weld repair layer, i.e, a subsequent weld repair layer, may be insufficient to penetrate through a total thickness of about 8 mm to temper the HAZ.

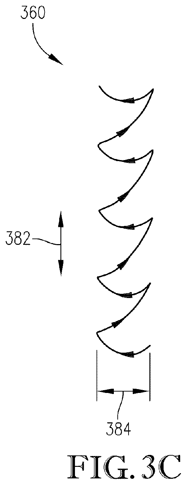

In the exemplary embodiment, weave bead welding is used in depositing 358 the second weld repair. In weave bead welding, weaving in welding, or welding in a weaving pattern, the welding head moves from side-to-side during welding. FIG. 3C shows an exemplary weaving pattern 380. Alternatively, any other weaving pattern(s), such as a triangular pattern or a curved pattern, may be used in the welding. During weaving, the welding head remains at a relative location with an increased duration as compared to other welding patterns, such that the heat input through the weave bead welding is facilitated to be increased. As such, tempering of the HAZ in the base material is facilitated with an improved efficiency. As described above, the heat input from depositing 358 the second weld repair layer is controlled by controlling the voltage and/or amperage of the current, and/or traverse speed of the welding head. For weaving, the traverse speed 382 (See FIG. 3C) of the welding head may be adjusted by adjusting a width 384 of the weaving pattern and/or by adjusting the travel speed of the welding head.

In the example embodiment, in depositing 358 the second weld repair layer, deposition may start from a center region 354 of the excavation 350 and progress towards an outer perimeter 356 of the excavation 350. In some embodiments, depositing the second weld repair layer starts from the outer perimeter 356 of the excavation 350 to the center region 354 of the excavation 350. Depositing starting from the center region 354 towards the outer perimeter 356 or starting from the outer perimeter 356 towards the center region 354 facilitates a substantially even heat distribution. As described above, welding the outer perimeter 356 may be alternated between different passes of deposition.

In the example embodiment, the method 300 further includes depositing 360 at least a third weld repair layer across the second weld repair layer. The same welding process used to deposit the second weld repair layer may be used in depositing the third weld repair layer 106-3. In some embodiments, a different welding technique than that used with depositing the second weld repair layer may be used. Using the same welding technique in depositing the second and later weld repair layers saves labor and costs associated with switching between different welding techniques and equipment. In depositing the third weld repair layer, the heat input from depositing the third weld repair layer is controlled by controlling voltage and/or amperage of the current, and/or the traverse speed of the welding head. The heat input from depositing the third layer is controlled to such a level that the deposition of the third layer does not introduce additional HAZ in the base material.

In the example embodiment, in depositing the third weld repair layer, deposition may start from a center region 354 of the excavation 350 and progress towards an outer perimeter 356 of the excavation 350. In some embodiments, depositing the third weld repair layer starts from the outer perimeter 356 of the excavation to the center region 354 of the excavation. Depositing starting from the center region 354 towards the outer perimeter 356 or from the outer perimeter 356 towards the center region 354 facilitates a substantially even heat distribution. As described above, welding the outer perimeter 356 may be alternated between different passes of deposition.

In the example embodiment, the method 300 further includes depositing 370 a subsequent weld repair layer over a previous weld repair layer. For example, a fourth layer may be deposited over the third layer, a fifth layer may be deposited over the fourth layer, and so on. Layers of weld repair are deposited into the excavation 350 until the defect is repaired, e.g., the cavity or excavation 350 created from removing the defect is filled. Depositing the fourth and later layers may use the same welding technique as the second welding technique, such as GMAW. In some embodiments, a welding technique different from the second welding technique may be used in depositing the fourth and later layers. Welding techniques may be different or the same as used previously in depositing one layer from another layer among the fourth and later layers.

In the example embodiment, in depositing the fourth and later weld repair layer, deposition may start from a center region 354 of the excavation 350 and progress towards an outer perimeter 356 of the excavation 350. In some embodiments, depositing the subsequent weld repair layer starts from the outer perimeter 356 of the excavation to the center region 354 of the excavation. Depositing starting from the center region 354 towards the outer perimeter 356 or from the outer perimeter 356 towards the center region 354 facilitates a substantially even heat distribution. As described above, welding the outer perimeter 356 may be alternated between different passes of deposition.

To limit introduction of HAZ from depositing a subsequent weld repair layer, the subsequent weld repair layer is deposited only atop the immediately previous weld repair layer. For example, the second weld repair layer 106-2 is deposited only atop the first weld repair layer 106-1, the third weld repair layer 106-3 only atop the second weld repair layer 106-2, and so on.

The third and later weld repair layers facilitate filling the excavation 350. Therefore, depositing the third and later weld repair layers may use stringer bead welding or welding in a stringer pattern, wherein the welding head moves forward, without a side-to-side motion, thereby increasing the speed of deposition. In some embodiments, weave bead welding may be used in depositing the third and later layers. In other embodiment, the patterns of used in the welding process may be different from one layer to another layer.

In the example embodiments, the filler material of the weld repair has a relatively low carbon content, thereby reducing the likelihood of being hardened caused by heat input from later deposited layers and having a relatively superior ductility when applied in the as-welded state. As a result, previous layers have a reduced likelihood of being hardened by depositing of the second and later layers, and tempering of the weld repair is not needed. A relatively low carbon filler also provides a balance between strength and room temperature ductility. Exemplary filler material is 80S-B3L [low carbon 2.25Cr 1.0Mo], with about 2.25% of Cr and about 1.0% of Mo by weight, or 70S-B2L [low carbon 1.25Cr 0.5 Mo], with about 1.25% of Cr and about 0.5% of Mo by weight. 80S-B3L may be used at a higher operating temperature than 70S-B2L.

Any of the welding techniques described herein may be applied manually by a welder or automatically by a robot. In some embodiments, some processes of the methods described herein are performed manually while other processes are performed by a robot.

At least one technical effect of the systems and methods described herein includes (a) depositing a first weld repair layer on the surface of an article using a first welding technique and depositing a second weld repair layer on the first weld repair layer using a second welding technique, wherein the first welding technique induces a lower heat input into the article being repaired than the second welding technique induces, and wherein the thickness of the first weld repair layer is thinner than the second weld repair layer; (b) using GTAW in depositing a first weld repair layer and using GMAW in depositing a second weld repair layer; and (c) using weave bead welding in depositing the second weld repair layer.

Systems and methods described herein are advantageous in providing a weld repair that is performed with increased speed and quality while facilitating reducing the overall costs of repair. Post-weld heat treatment is unnecessary, and as such, distortion from the post-weld heat treatment is facilitated to be reduced and/or eliminated. Further, localized tempering, such as torch tempering, is unnecessary such that risks associated with open flame and distortion from the relatively high heat input are eliminated. Moreover, a need for inter-pass machining, common in at least some known temperbead methods, is eliminated, thereby reducing the costs and duration of repair. Systems and methods described herein use commercially available filler materials, thereby facilitating reducing costs from procuring fillers.

Further aspects of the invention are provided by the subject matter of the following clauses:

A method for repairing a steel alloy article, the method comprising: depositing, using a first welding process, a first weld repair layer across a surface of the steel alloy article to be repaired, wherein the first weld repair layer forms a heat-affected zone (HAZ) in the steel alloy article beneath the surface; and tempering the heat-affected zone by depositing, using a second welding process, a second weld repair layer across the first weld repair layer, wherein the first welding technique is different than the second welding process and induces a lower heat input into the steel alloy article than the second welding process, wherein a thickness of the first weld repair layer is thinner than a thickness of the second weld repair layer.

The method of any of preceding clauses, wherein depositing the first weld repair layer further comprises: depositing the first weld repair layer using a gas tungsten arc welding (GTAW) process.

The method of any of preceding clauses, wherein depositing the second weld repair layer further comprises: depositing the second weld repair layer using a gas metal arc welding (GMAW) process.

The method of any of preceding clauses, wherein depositing the second weld repair layer further comprises using a weaving pattern while depositing the second weld repair layer.

The method of any of preceding clauses, wherein depositing the second weld repair layer further comprises controlling the depositing of the second weld repair layer by controlling a thickness of the second weld repair layer and a heat input induced via the second welding process.

The method of any of preceding clauses, wherein depositing the first weld repair layer further comprises controlling the depositing of the first weld repair layer by controlling a thickness of the first weld repair layer and an amount of heat input induced via the first welding process.

The method of any of preceding clauses, wherein the first weld repair layer and the second weld repair layer each include 80S-B3L.

The method of any of preceding clauses, wherein the first weld repair layer and the second weld repair layer each include 70S-B2L.

The method of any of preceding clauses, wherein depositing the second weld repair layer further comprises: depositing the second weld repair layer starting from a center region of an excavation in the steel alloy article and welding towards an outer perimeter of the excavation; and/or depositing the second weld repair layer starting from the outer perimeter of the excavation to the center region of the excavation.

The method of any of preceding clauses, wherein depositing the second weld repair layer further comprises: alternating between a first side of the outer perimeter of the excavation and a second side of the outer perimeter, wherein the first side is opposite the second side of the outer perimeter.

The method of any of preceding clauses, wherein depositing the first weld repair layer further comprises: depositing the first weld repair layer starting from a center region of an excavation in the steel alloy article and welding towards an outer perimeter of the excavation; and/or depositing the first weld repair layer starting from the outer perimeter of the excavation to the center region of the excavation.

The method of any of preceding clauses, wherein depositing the first weld repair layer further comprises: alternating between a first side of the outer perimeter of the excavation and a second side of the outer perimeter, wherein the first side is opposite the second side of the outer perimeter.

The method of any of preceding clauses further comprising depositing, using the second welding process, a third weld repair layer across the second weld repair layer.

The method of any of preceding clauses, wherein depositing the third weld repair layer further comprises: depositing the third weld repair layer in a stringer pattern.

The method of any of preceding clauses, wherein depositing the third weld repair layer further comprises: depositing the third weld repair layer starting from a center region of an excavation in the steel alloy article and welding towards an outer perimeter of the excavation; and/or depositing the third weld repair layer starting from the outer perimeter of the excavation to the center region of the excavation.

The method of any of preceding clauses further comprising: depositing, using the second welding process, a subsequent weld repair layer across a previous weld repair layer.

The method of any of preceding claims, wherein depositing the subsequent weld repair layer further comprises: depositing, using the second welding process, the subsequent weld repair layer across the previous weld repair layer in a stringer pattern.

The method of any of preceding claims, wherein depositing the subsequent weld repair layer further comprises: depositing the subsequent weld repair layer only atop an immediately-previous weld repair layer.

A method for repairing a steel alloy article, the method comprising: depositing, using a gas tungsten arc welding (GTAW) technique, a first weld repair layer across a surface of a steel alloy article, wherein the first weld repair layer forms a heat-affected zone in the steel alloy article beneath the surface; and tempering the heat-affected zone by depositing, using a gas metal arc welding (GMAW) technique, a second weld repair layer across the first weld repair layer, wherein the GTAW technique has a lower heat input than the GMAW technique, and wherein a thickness of the first weld repair layer is thinner than a thickness of the second weld repair layer.

Exemplary embodiments of systems and methods for weld repair are described above in detail. The systems and methods are not limited to the specific embodiments described herein but, rather, components of the systems and/or operations of the methods may be utilized independently and separately from other components and/or operations described herein. Further, the described components and/or operations may also be defined in, or used in combination with, other systems, methods, and/or devices, and are not limited to practice with only the systems described herein.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" and/or "substantially" as applied to a particular value of a range applies to both values, and unless otherwise dependent on the precision of the instrument measuring the value, may indicate +/- 10% of the stated value(s).

As used herein, an element or step recited in the singular and proceeded with the word "a" or "an" should be understood as not excluding plural elements or steps, unless such exclusion is explicitly recited. Furthermore, references to "example" or "one example" of the present disclosure are not intended to be interpreted as excluding the existence of additional examples that also incorporate the recited features. Further, to the extent that terms "includes," "including," "has," "contains," and variants thereof are used herein, such terms are intended to be inclusive in a manner similar to the term "comprises" as an open transition word without precluding any additional or other elements.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method (300) for repairing a steel alloy article, the method comprising:
depositing (302), using a first welding process, a first weld repair layer across a surface of the steel alloy article to be repaired, wherein the first weld repair layer forms a heat-affected zone (HAZ) in the steel alloy article beneath the surface; and
tempering (304) the heat-affected zone by depositing (358), using a second welding process, a second weld repair layer across the first weld repair layer, wherein the first welding technique is different than the second welding process and induces a lower heat input into the steel alloy article than the second welding process, wherein a thickness of the first weld repair layer is thinner than a thickness of the second weld repair layer.

2. The method (300) of claim 1, wherein depositing the first weld repair layer further comprises:
depositing the first weld repair layer using a gas tungsten arc welding (GTAW) process.

3. The method (300) of any of the preceding claims, wherein depositing the second weld repair layer further comprises:
depositing the second weld repair layer using a gas metal arc welding (GMAW) process.

4. The method (300) of any of the preceding claims, wherein depositing the second weld repair layer further comprises using a weaving pattern while depositing the second weld repair layer.

5. The method (300) of any of the preceding claims, wherein depositing the second weld repair layer further comprises controlling the depositing of the second weld repair layer by controlling a thickness of the second weld repair layer and a heat input induced via the second welding process.

6. The method (300) of any of the preceding claims, wherein depositing the first weld repair layer further comprises controlling the depositing of the first weld repair layer by controlling a thickness of the first weld repair layer and an amount of heat input induced via the first welding process.

7. The method (300) of any of the preceding claims, wherein the first weld repair layer (106-1) and the second weld repair layer (106-2) each include 80S-B3L.

8. The method (300) of any of the preceding claims, wherein the first weld repair layer (106-1) and the second weld repair layer (106-2) each include 70S-B2L.

9. The method (300) of any of the preceding claims, wherein depositing (358) the second weld repair layer further comprises:
depositing the second weld repair layer starting from a center region of an excavation in the steel alloy article and welding towards an outer perimeter of the excavation; and/or
depositing the second weld repair layer starting from the outer perimeter of the excavation to the center region of the excavation.

10. The method (300) of claim 9, wherein depositing (358) the second weld repair layer further comprises:
alternating between a first side of the outer perimeter of the excavation and a second side of the outer perimeter, wherein the first side is opposite the second side of the outer perimeter.

11. The method (300) of any of the preceding claims, wherein depositing (302) the first weld repair layer further comprises:
depositing the first weld repair layer starting from a center region of an excavation in the steel alloy article and welding towards an outer perimeter of the excavation; and/or
depositing the first weld repair layer starting from the outer perimeter of the excavation to the center region of the excavation; and, optionally,
alternating between a first side of the outer perimeter of the excavation and a second side of the outer perimeter, wherein the first side is opposite the second side of the outer perimeter.

12. The method (300) of any of the preceding claims further comprising depositing (360), using the second welding process, a third weld repair layer across the second weld repair layer.

13. The method (300) of any of the preceding claims, wherein depositing (360) the third weld repair layer further comprises:
depositing the third weld repair layer in a stringer pattern.

14. The method (300) of any of the preceding claims, wherein depositing (360) the third weld repair layer further comprises:
depositing the third weld repair layer starting from a center region of an excavation in the steel alloy article and welding towards an outer perimeter of the defect; and/or
depositing the third weld repair layer starting from the outer perimeter of the excavation to the center region of the excavation; and, optionally,
alternating between a first side of the outer perimeter of the excavation and a second side of the outer perimeter, wherein the first side is opposite the second side of the outer perimeter.

15. The method (300) of any of the preceding claims further comprising:
depositing (370), using the second welding process, a subsequent weld repair layer across a previous weld repair layer; and, optionally
depositing, using the second welding process, the subsequent weld repair layer across the previous weld repair layer in a stringer pattern; and/or
depositing the subsequent weld repair layer only atop an immediately-previous weld repair layer.
